# EUROPEAN PATENT SPECIFICATION

(11) **EP 0 689 000 B1**
(45) Date of publication and mention of the grant of the patent: **09.09.1998**
(21) Application number: 95109351.7
(22) Date of filing: 16.06.1995
(51) Int. Cl.: F21Q 1/00, B60Q 1/26

(54) **Vehicle Lamp**
KFZ-Leuchte
Lampe pour véhicule automobile

(30) Priority: 22.06.1994 IT TO940513
(43) Date of publication of application: 27.12.1995
(73) Proprietor: MAGNETI MARELLI S.p.A., 20145 Milano (IT)
(72) Inventor: Neytcheva, Iordanka, 14033 Callianetto (IT)
(74) Representative: Jorio, Paolo, Dr. Ing.

(56) References cited:
- WO-A-94/05949
- DE-A- 3 916 875
- GB-A- 2 139 340

## Description

The present invention relates to a vehicle lamp.

In particular, the present invention is of advantageous application to the field of direction indicators, to which the following discussion will make explicit reference without thereby losing in generality.

As is well known, a direction indicator normally comprises a light source capable of emitting a light beam, and a lens of light-permeable material positioned in front of the light source, cooperating with said light source in order to generate an output light beam of amber yellow coloration.

In most applications the amber yellow coloration of the output light beam is produced by using a light source capable of emitting a light beam of amber yellow coloration and a substantially colourless transparent lens.

Alternatively, the output light beam is produced by using a source of white light and providing an amber yellow lens.

Though universally used, known direction indicators of the sort described above present certain problems of an aesthetic nature especially when combined with other light beam emitters to form a rear optical unit on a vehicle.

The problem here is that the lens of the direction indicator introduces an undesired nonuniformity into the coloration of the lens of the complete optical unit inasmuch as its colour is different from the colour of the lenses of all the other emitters of the optical unit. In particular, the lens of the direction indicator is of a colour which, in both the alternatives described above, differs noticeably from the red colour of the lenses of all the other emitters of the optical unit, with the exception of that of the reversing light.

It is an object of the present invention to provide a vehicle lamp that will in a simple way overcome the disadvantage described above and at the same time offer a high functional efficiency.

The present invention provides a vehicle lamp comprising a light source, and a light-permeable lens positioned in front of said light source, the light source comprising a plurality of light-emitting diodes each having its own emission spectrum, the lamp being characterized in that said light-emitting diodes are each capable of emitting an amber yellow light beam, and in that the lens is of a red coloration and has a low-pass transfer function that extends substantially beyond the emission spectrum of each of said light-emitting diodes in such a way as not substantially to vary a dominant wavelength of said light-emitting diodes.

Preferably, in the lamp defined above, said transfer function has a wavelength corresponding to a cut-off frequency less than the wavelength corresponding to the central emission frequency of each of said light-emitting diodes.

The invention will now be described with reference to the accompanying figures, which illustrate a non-restricting example of an embodiment thereof, in which:
Figure 1 shows, schematically and in section, a preferred embodiment of the lamp according to the present invention; and
Figure 2 shows the graphs of the light emitted by the light source of the lamp and of the light transmitted by said lamp, and the transfer function of a light-permeable lens placed in front of said light source.

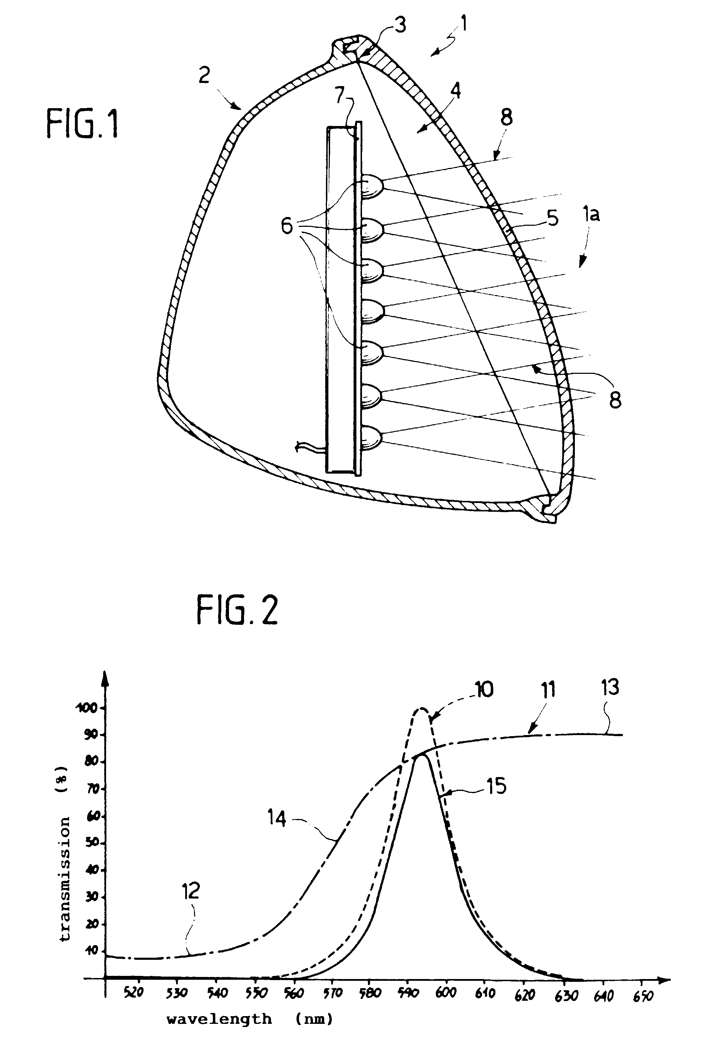

In Figure 1, the numeral 1 indicates as a whole a vehicle lamp capable of emitting, in use, an amber yellow light beam 1a, and preferably of fulfilling the function of a direction indicator.

The lamp 1 comprises an outer shell 2 having an aperture 3, a light source 4 housed inside the shell 2, and a body or lens 5 of light-permeable material positioned so as to close the aperture 3 in front of the source 4.

The source 4 comprises a plurality of light-emitting diodes 6, commonly known in the trade as "LEDs" which are mounted on a supporting wall 7 housed inside the shell 2 and connected, in a known manner, to the shell 2 itself, and are distributed on the wall 7 in front of the lens 5.

With reference to Figure 2, each diode 6 emits, when in use, towards the lens 5 an individual beam 8 of amber yellow light, and has an emission spectrum whose graph is shown in Figure 2 as a function of wavelength, by the dashed curve indicated by the numeral 10. In particular, the spectrum of each diode 6 extends within a field of wavelengths lying between 545 and 640 nm (nanometres) and has a maximum central value at a wavelength of approximately 594 nm and a wavelength corresponding to a central emission frequency of between 590 and 595 nm.

Referring still to Figure 2, the lens 5 is made of a plastics material, especially methacrylate commonly known by the commercial term "DEGALAN 7330" having trichroic coordinates equal to 0.645 along the X-axis and 0.338 along the Y axis, and has a red coloration, and a transfer function represented by the dot-and-dashed curve 11 in Figure 2. The transfer function of the lens 5 is of the low-pass type: it extends mostly beyond the emission spectrum of each of the diodes 6 in such a way as not substantially to vary a dominant or peak wavelength of the diodes 6, and has a wavelength corresponding to a cut-off frequency less than the wavelength corresponding to the emission frequency of said diodes 6. In particular, the transfer function of the lens 5 has a wavelength corresponding to a cut-off frequency of between 550 and 580 nm, and comprises a first approximately straight and horizontal portion 12 extending, in Figure 2, to the left of the curve 10, within a range of wavelengths lying approximately between 510 and 540 nm, a second portion 13, also approximately straight and approximately parallel to the first portion 12, extending, in Figure 2, to the right of the curve 10, within a range of wavelengths lying between 615 and 650 nm; and a third portion 14 forming an approximate S shape that connects portions 12 and 13 to each other.

It will be clear from the account given immediately above and from Figure 2 that the lens 5, when in use, does not substantially modify the emission spectrum of the diodes 6, since it enables transmitted light to be obtained from the lamp 1, whose spectrum is represented by the continuous curve 15 in Figure 2. The curve 15 is similar in shape to the curve 10 and in particular is a symmetrical peaked curve with a maximum at the same wavelength as the maximum central value of the emission spectrum of the diodes 6.

The light beam emitted by the lamp 1 is therefore of the same colour as the light beam 8 emitted by each of the diodes 6, and hence of an amber yellow coloration, because, during its passage through the lens 5, the light generated by the diodes 6 undergoes no substantial change to its wavelength and hence to its colour.

From the above, and on the basis of Figure 2, it will be clear that the special characteristics of the lens 5 mean that in the first place it is possible to reduce loss of light due to absorbtion to values below fifty per cent and consequently to use a relatively limited number of diodes.

Furthermore, the special colour of the lens 5 makes it possible to produce a rear optical unit (not shown) for vehicles in which the lens is of an approximately uniform colour because the lens of the direction indicator is also of a red coloration, like the lenses of the other emitters forming the rear optical unit.

Lastly, it will be clear from the foregoing that modifications and alterations can be made to the lamp 1 here described that do not go beyond the scope of protection of the present invention. In particular, the lens could have a slightly different transfer function from that described by way of an example, provided it still includes almost completely the emission spectrum of each of the diodes 6.

## Claims

1. Vehicle lamp (1) comprising a light source (4), and a light-permeable lens (5) positioned in front of said light source (4), the light source (4) comprising an electronic light-emitting assembly (6) having its own emission spectrum (10), the lamp being characterized in that said electronic light-emitting assembly (6) is capable of emitting an amber yellow light beam (8), and in that the lens (5) is of a red coloration and has a low-pass transfer function (11) that extends substantially beyond the emission spectrum (10) of said light-emitting assembly (6) in such a way as not substantially to vary a dominant wavelength of said light-emitting assembly (6).

2. Lamp according to Claim 1, characterised in that said electronic light-emitting assembly comprises a plurality of light-emitting diodes (6), each for emitting a respective amber yellow light beam.

3. Lamp according to Claim 2, characterized in that said transfer function (11) has a wavelength, corresponding to a cut-off frequency, less than the wavelength corresponding to the central emission frequency of each of said light-emitting diodes (6).

4. Lamp according to Claim 3, characterized in that said wavelength corresponding to said cut-off frequency has a value of between 550 and 580 nm, and the wavelength corresponding to said central emission frequency has a value of between 590 and 595 nm.

5. Lamp according to any one of the previous claims, characterized in that it emits an amber yellow light with a spectrum (15) of symmetrical shape and a maximum central value at the same wavelength as a maximum central value of the emission spectrum (10) of said electronic light-emitting assembly (6).

6. Lamp according to any one of the previous claims, characterized in that said lens (5) is made of methacrylate.

## Patentansprüche

1. Kraftfahrzeuglampe (1), umfassend eine Lichtquelle (4) und eine lichtdurchlässige Linse (5), die vor der Lichtquelle (4) angeordnet ist, wobei die Lichtquelle eine elektronische lichtemittierende Anordnung (6) umfaßt, die ihr eigenes Emissionsspektrum (10) aufweist, wobei die Lampe **dadurch gekennzeichnet** ist, daß die elektronische lichtemittierende Anordnung (6) fähig ist, einen honiggelben Lichtstrahl (8) zu emittieren, und daß die Linse (5) von roter Farbe ist und eine Niederpass-Übertragungsfunktion (11) besitzt, die sich im wesentlichen über das Emissionsspektrum (10) der lichtemittierenden Anordnung (6) in der Weise erstreckt, daß eine dominante Wellenlänge der lichtemittierenden Anordnung (6) im wesentlichen nicht variiert wird.

2. Lampe nach Anspruch 1, dadurch gekennzeichnet, daß die elektronische lichtemittierende Anordnung eine Vielzahl von lichtemittierenden Dioden (6) umfaßt, von denen jede einen entsprechenden honiggelben Lichtstrahl emittiert.

3. Lampe nach Anspruch 2, dadurch gekennzeichnet, daß die Übertragungsfunktion (11) eine Wellenlänge entsprechend einer Grenzfrequenz geringer als die Wellenlänge entsprechend der mittleren Emissionsfrequenz jeder der lichtemittierenden Dioden (6) besitzt.

4. Lampe nach Anspruch 3, dadurch gekennzeichnet, daß die Wellenlänge entsprechend der Grenzfrequenz einen Wert zwischen 550 und 580 nm und die Wellenlänge entsprechend der mittleren Emissionsfrequenz einen Wert zwischen 590 und 595 nm besitzt.

5. Lampe nach einem der vorhergehenden Ansprüche, dadurch gekennzeichnet, daß sie ein honiggelbes Licht mit einem Spektrum (15) von symmetrischer Form und einem maximalen Mittelwert bei der gleichen Wellenlänge wie ein maximaler Mittelwert des Emissionsspektrums (10) der elektronischen lichtemittierenden Anordnung (6) besitzt.

6. Lampe nach einem der vorhergehenden Ansprüche, dadurch gekennzeichnet, daß die Linse (5) aus Methacrylat hergestellt ist.

## Revendications

1. Lampe (1) de véhicule, comportant une source de lumière (4), et une lentille (5) perméable à la lumière positionnée en avant de ladite source de lumière (4), la source de lumière (4) comportant un ensemble électronique émetteur de lumière (6) ayant son propre spectre d'émission (10), la lampe étant caractérisée en ce que ledit ensemble électronique d'émission de lumière (6) est capable d'émettre un faisceau lumineux jaune ambré (8), et en ce que la lentille (5) a une coloration rouge et a une fonction de transfert passe-bas (11) qui s'étend nettement au-delà du spectre d'émission (10) dudit ensemble électronique d'émission de lumière (6) de manière à ne pratiquement pas faire varier de longueur d'onde dominante dudit ensemble électronique émetteur de lumière (6).

2. Lampe selon la revendication 1, caractérisée en ce que ledit ensemble électronique émetteur de lumière comporte plusieurs diodes émettrices de lumière (6), chacune étant destinée à émettre un faisceau lumineux respectif jaune ambré.

3. Lampe selon la revendication 2, caractérisée en ce que ladite fonction de transfert (11) a une longueur d'onde, correspondant à une fréquence de coupure, plus petite que la longueur d'onde correspondant à la fréquence centrale d'émission de chacune desdites diodes émettrices de lumière (6).

4. Lampe selon la revendication 3, caractérisée en ce que ladite longueur d'onde correspondant à ladite fréquence de coupure a une valeur comprise entre 550 et 580 nm, et la longueur d'onde correspondant à ladite fréquence centrale d'émission a une valeur comprise entre 590 et 595 nm.

5. Lampe selon l'une quelconque des revendications précédentes, caractérisée en ce qu'elle émet une lumière jaune ambré ayant un spectre (15) de forme symétrique et ayant une valeur centrale maximum à la même longueur d'onde que la valeur centrale maximum du spectre d'émission (10) dudit ensemble électronique émetteur de lumière (6).

6. Lampe selon l'une quelconque des revendications précédentes, caractérisée en que ladite lentille (5) est constituée de méthacrylate.
